# EUROPEAN PATENT APPLICATION

(11) **EP 4 520 668 A1**
(43) Date of publication of application: **12.03.2025**
(21) Application number: 23210473.7
(22) Date of filing: 16.11.2023
(51) Int. Cl.: B64F 1/36, G06F 21/31, G06F 21/32, G06F 21/34, G07C 9/27, G07C 9/37

(54) **SYSTEM AND METHOD FOR BAGGAGE SCREENING USING BIOMETRIC INFORMATION AND IDENTIFICATION INFORMATION**

(30) Priority: 07.09.2023 KR 20230119119
(71) Applicant: Cubox Co., Ltd., Seoul, 06236 (KR)
(72) Inventor: CHUN, Ki Cheol, 05118 Seoul (KR); KWON, Hyeok Jin, 21559 Incheon (KR); MUN, Hyun Min, 17149 Gyeonggi-do (KR); NAM, Un Sung, 04311 Seoul (KR)
(74) Representative: Ostertag & Partner Patentanwälte mbB

(57) **Abstract**

A system and method for baggage screening using biometric information and identification information are proposed. In the system and the method of operating the same, the system includes a security screening device for detecting a tray to which identification information is attached and recognizing the tray, at least one or more terminals for guiding a user and obtaining biometric information of the user, and a server for matching the biometric information with the identification information of the tray and performing authorization of the biometric information and the identification information of the tray.

## Description

### CROSS REFERENCE TO RELATED APPLICATION

The present application claims priority to Korean Patent Application No. 10-2023-0119119, filed September 07, 2023, the entire contents of which is incorporated herein for all purposes by this reference.

### BACKGROUND OF THE INVENTION

### Field of the Invention

The present disclosure relates to a system and method for baggage screening using biometric information and identification information of a tray.

### Description of the Related Art

Trays are used at airports for various reasons. The trays make it easier for passengers to organize and move their belongings, and pass through an X-ray screening equipment without direct contact, so that a screening process is convenient and unnecessary contact is maximally reduced, whereby smart security may be strengthened.

In addition, trays reduce the risk of loss because of allowing rapid screening of large quantities of luggage without being mixed up the luggage at an airport for which multiple people use at the same time, and enable checking whether belongings match their owners or not, thereby improving efficiency in terms of the security screening and airport operation.

However, currently, although loading items into a tray and undergoing security screening are proceeded smoothly due to guidance from information personnel during the security screening, manpower reduction is prerequisite in order to realize smart airports, so there are limitations in providing direct services.

Accordingly, at a time when security screening personnel in duty are not present, in a case where a different tray other than a standard tray corresponding to security screening equipment is used or items are entered into the security screening equipment without a tray, there are also emerging problems that the security screening personnel may be confused and the safety of users and security equipment may be threatened.

Ultimately, although the goal of a future-oriented airport is to automate security screening tables, in reality, there is no way to solve such a problem.

### SUMMARY OF THE INVENTION

An objective of the present disclosure is to identify information of a tray and a user by using identification information attached to the tray and biometric information of the user, so as to match a loading person with a receiving person and search for a relevant person easily in case of a security screen violation.

According to an exemplary embodiment of the present disclosure, there is provided a system for baggage screening, the system including: a security screening device for detecting a tray to which identification information is attached and recognizing the tray; at least one or more terminals for guiding a user and obtaining biometric information of the user; and a server for matching the biometric information with the identification information of the tray and performing authorization of the biometric information and the identification information of the tray.

In addition, the security screening device may include a loading table, a receiving table, and a screening module and the at least one or more terminals may be arranged within a predetermined distance from each of the loading table or the receiving table, so as to provide guidance on loading or receiving to the user through a display.

In addition, the security screening device may include at least one or more readers for recognizing the identification information attached to the tray, and the at least one or more readers may be provided at each of the loading table, the receiving table, and the screening module.

In addition, the biometric information may include at least one of the user's facial information, iris information, and fingerprint information.

In addition, an identification code may include a barcode, and a language of the barcode may include at least one of "UPC", "Code 128", and "QR Code".

In addition, an identification code attached to the tray may be recognized through a first reader, provided at the loading table, among the at least one or more readers, the user's biometric information may be obtained through a first terminal, arranged at the loading table, among the at least one or more terminals, and the server may match the biometric information received from the first terminal with the identification information identified from the first reader and store the matched information in a memory.

In addition, the server may determine whether the identification information obtained by using the first reader is the authorized identification information or not.

In a case of corresponding to identification information not authorized in advance as a result of recognizing the identification information obtained by using the first reader, the server may provide a notification to security screening personnel through a warning light provided in the security screening device.

In addition, the identification code attached to the tray may be recognized through a third reader, provided at the receiving table, among the at least one or more readers, the user's biometric information may be obtained through a second terminal, arranged at the receiving table, among the at least one or more terminals, the server may match the biometric information received from the second terminal with the identification information identified from the third reader, and the server may determine that the biometric information and the tray information match each other in a case where the biometric information obtained through the second terminal arranged at the receiving table and the identification information obtained through the third reader respectively match the biometric information obtained through the first terminal arranged at the loading table and the identification information obtained through the first reader provided at the loading table.

In addition, in a case where two or more people are recognized by a camera when the user's biometric information is obtained, the at least one or more terminals may guide the user that loading or receiving is restricted through a display of each terminal.

In addition, according to the exemplary embodiment of the present disclosure, there is provided a method for operating a system for baggage screening, the method including: detecting, by a security screening device, a tray to which identification information is attached and recognizing the tray; guiding, by at least one or more terminals, a user and obtaining the user's biometric information; and matching, by a server, the biometric information with the identification information of the tray and performing authorization of the biometric information and the identification information of the tray.

In addition, the security screening device may include a loading table, a receiving table, and a screening module, and the guiding of the user by the at least one or more terminals may include providing guidance on loading or receiving to the user through a display by the at least one or more terminals arranged within a predetermined distance from each of the loading table or the receiving table.

In addition, the obtaining of the user's biometric information by the at least one or more terminals may include: recognizing an identification code attached to the tray through a first reader, provided at the loading table, among the at least one or more readers; and obtaining the user's biometric information through a first terminal, arranged at the loading table, among the at least one or more terminals, and the matching, by the server, of the biometric information with the identification information of the tray and performing of the authorization of the biometric information and the identification information of the tray may include matching, by the server, the biometric information received from the first terminal with the identification information identified from the first reader and storing the matched information in a memory.

In addition, the matching, by the server, the biometric information with the identification information of the tray and performing of the authorization of the biometric information and the identification information of the tray may include determining, by the server, whether the identification information obtained by using a third reader is the identification information obtained and authorized by using the first reader.

The method further includes providing, by the server, a notification to security screening personnel through a warning light provided in the security screening device in a case of corresponding to identification information not authorized in advance as a result of recognizing the identification information obtained by using the first reader.

In addition, the obtaining of the user's biometric information by the at least one or more terminals may include: recognizing the identification code attached to the tray through a third reader, provided at the receiving table, among the at least one or more readers; and obtaining the user's biometric information through a second terminal, arranged at the receiving table, among the at least one or more terminals, and
the matching, by the server, of the biometric information with the identification information of the tray and performing of the authorization of the biometric information and the identification information of the tray may include: matching, by the server, the biometric information received from the second terminal with the identification information identified from the third reader; and determining, by the server, that the biometric information and the tray information match each other in a case where the biometric information obtained through the second terminal arranged at the receiving table and the identification information obtained through the third reader respectively match the biometric information obtained through the first terminal arranged at the loading table and the identification information obtained through the first reader provided at the loading table.

In addition, the guiding of the user by the at least one or more terminals may include guiding, by the at least one or more terminals, the user that loading or receiving is restricted through a display of each terminal in a case where two or more people are recognized by a camera when the user's biometric information is obtained.

The present disclosure has merits that confusion caused to users and security personnel is maximally reduced and security screening equipment is protected by forcing the use of trays.

The present disclosure may facilitate person search, security screening information matching, and the like through tray usage information, thereby responding to emergency situations easily.

The present disclosure may realize manpower reduction that is the goal of smart airports through a security screening device, tray identification information, and terminals for informing users a use method.

### BRIEF DESCRIPTION OF THE DRAWINGS

FIG. 1 is a view illustrating a system 1 according to an exemplary embodiment of the present disclosure.
FIG. 2 is a view illustrating a security screening device 300 according to the exemplary embodiment of the present disclosure.
FIG. 3 a view illustrating terminals arranged at a loading table or a receiving table according to the exemplary embodiment of the present disclosure.
FIG. 4 is a flowchart illustrating an operation of the system according to the exemplary embodiment of the present disclosure.
FIG. 5 is a flowchart illustrating an operation of the system according to the exemplary embodiment of the present disclosure.

### DETAILED DESCRIPTION OF THE INVENTION

In the technology described below, various modifications may be made and various exemplary embodiments may be provided, so particular exemplary embodiments will be illustrated in the drawings and described in detail. However, this is not intended to limit the technology described below to a particular embodiment form. On the contrary, the present disclosure is to be understood to include all various alternatives, equivalents, and substitutes that may be included within the spirit and technical scope of the technology described below.

Terms such as first, second, A, B, etc. may be used to describe various components, but the corresponding components are not limited by the terms, and are used only for the purpose of distinguishing one component from another component. For example, without departing from the scope of the technology described below, a first component may be referred to as a second component, and similarly, the second component may be referred to as the first component. The term "and/or" includes a combination of a plurality of related and described items or any of the plurality of related and described items.

In the terms used in the present specification, singular expressions should be understood to include plural expressions unless the context clearly interprets otherwise. It should be understood that the terms such as "includes", "comprises", and the like mean that the described feature, number, step, operation, component, part, or combination thereof exists, but do not preclude possibilities of the presence or addition of one or more other features, numbers, steps, operations, components, parts, or combinations thereof.

Prior to a detailed description of the drawings, it should be clarified that the classification of components in the present specification is merely a classification for each main function of each corresponding component. That is, it may be provided such that two or more components described below may be combined into one component, or one component may be divided into two or more components for each more subdivided function. Further, in addition to its corresponding main function, each component to be described below may additionally perform some or all of the functions of other components, and naturally, a part of the corresponding main function of each component may also be exclusively performed by other designated components.

In addition, in performing a method or method of operation, each process constituting the method may be performed in a different order from a specified order unless a specific order is clearly described in context. That is, each process may be performed in the same order as specified, may be performed substantially simultaneously, or may be performed in a reverse order.

First, terms according to an exemplary embodiment of the present disclosure are defined.

"Security screening device" may include an A-TRS and may refer to an automatic tray transfer device provided with a conveyor maximally increasing tray throughput, so as to inspect users' items.

"Tray" may refer to a basket formed with a space for containing a user's items or baggage, and may be brought into contact with a security screening device and be transferred on the basis a conveyor design.

"Identification information" may refer to a tray's unique information attached to the tray. A user using the corresponding tray may be identified by matching the identification information with the user's biometric information. The identification information may be realized in various ways, such as QR codes and barcodes.

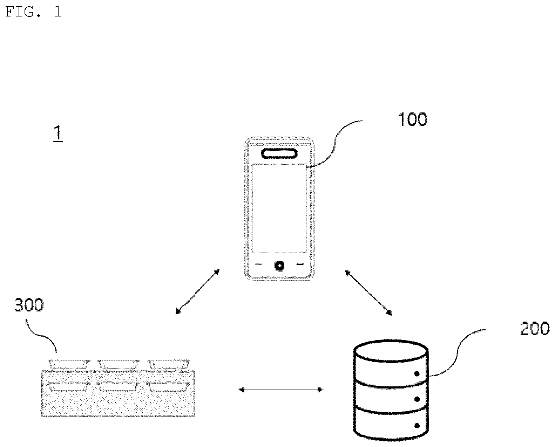

FIG. 1 is a view illustrating a baggage screening system 1 according to the exemplary embodiment of the present disclosure.

Referring to FIG. 1, the baggage screening system 1 may include a terminal 100, a server 200, and a security screening device 300, which are for obtaining a user's biometric information.

Specifically, the terminal 100 is for the purpose of obtaining the user's biometric information and guiding the user, and may be implemented with movable devices such as mobile phones, smartphones, personal digital assistants (PDAs), portable multimedia players (PMPs), navigation devices, tablet PCs, and wearable devices.

According to the exemplary embodiment of the present disclosure, the terminal 100 may include a communication unit, an input unit, a sensing unit, a display, a memory, a processor, etc.

The communication unit may transmit and receive data with other electronic devices or external devices such as a server 200 and a security screening device 300 by using wired and wireless communication technology.

The input unit may obtain various types of data.

In this case, the input unit may include a camera for inputting image signals, a microphone for receiving audio signals, a user input unit for receiving an input of information from a user, etc. Here, by considering the camera or microphone as a sensor, signals obtained from the camera or microphone may be referred to as sensing data or sensor information.

The sensing unit may use various sensors to obtain at least one of terminal internal information, terminal surrounding environment information, and user information.

In this case, the sensors included in the sensing unit include a proximity sensor, an illumination sensor, an acceleration sensor, a magnetic sensor, a gyro sensor, an inertial sensor, an RGB sensor, an IR sensor, a fingerprint recognition sensor, an ultrasonic sensor, an optical sensor, and a microphone, a LIDAR, a radar, etc.

The display may generate an output related to visual, auditory, or tactile senses.

The memory may store data that supports various functions of a terminal. For example, the memory may store input data obtained from the input unit, and various data obtained from a server or a connected device.

The processor may determine at least one executable operation of a terminal. In addition, the processor may control components of the terminal to perform determined operations.

The server 200 according to the exemplary embodiment of the present disclosure may match biometric information with tray identification information, authorize the biometric information and the tray identification information, and store this information.

The server 200 may include a communication unit, a memory, a processor, and the like for the above operations. Redundant descriptions of the configurations of the server 200 and the terminal 100 will be omitted.

The server 200 according to the exemplary embodiment of the present disclosure may further include a recognition unit for storing and managing information such as identification information attached to a tray and location information from which identification information is obtained. In addition, biometric information, feature points extracted from the biometric information, and information on the number of recognized people may be stored through the memory.

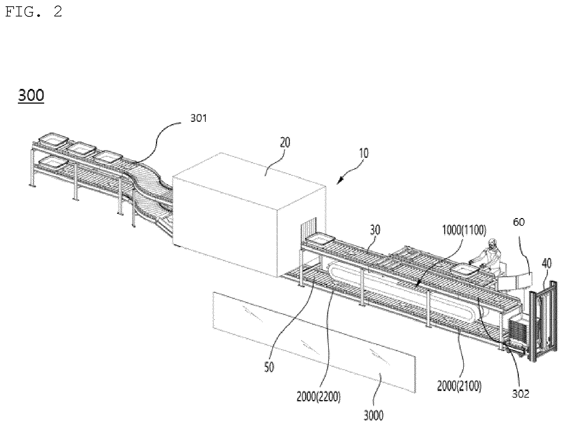

FIG. 2 is a view illustrating a configuration of the security screening device 300 according to the exemplary embodiment of the present disclosure.

Referring to FIG. 2, the security screening device 300 may include at least one or more conveyors 30, and each conveyor may be configured with components, based on locations and functions thereof, such as a loading table 301 where trays are loaded, an input module to which the trays are input, a transfer module 50 for transferring the trays, a sorting table for sorting the trays, a re-screening table, a retrieval module 40 for retrieving the trays, and a receiving table 302 where a user receives items.

In addition, the security screening device 300 may include an ultraviolet emission module 1000 for a sterilization system, a detection sensor 2000, and a shielding panel 3000. In addition, the security screening device 300 may further include a screening module 10 for inspecting items or baggage contained in a tray and authorizing identification information of the tray.

The screening module 10 may include: a screening unit 20 for inspecting items; a sensor unit for detecting a tray before the tray enters; the tray to which identification information pre-authorized through the system 1 is attached; and a reader for recognizing the identification information attached to the tray.

In this case, the screening unit may include: an X-ray screener for detecting hazardous substances and explosives that are included in passengers' carry-on items, checked baggage, cargo of airlines and ships, and the like; and a screener based on computed tomography (CT).

Meanwhile, the security screening device 300 may further include: a warning light (related to warning or danger) for providing at least one or more colors that may notify security personnel of security suspicion according to the exemplary embodiment to be described later; and a display 60 for outputting an item security screening screen for security screening.

In this case, the display for performing security screening may include a display used by security screening personnel to perform the security screening while viewing results of the security screening device in a special space or surroundings.

Meanwhile, the security screening device 300 of the present disclosure may be provided with a plurality of readers, and the plurality of respective readers may be installed on one ends or one sides of the loading table, receiving table, and screening module.

Through this way, the system 1 is enabled to identify trays other than trays to which authorized identification information is attached, and at the same time obtain information such as locations, dates, times, and the like of loading and receiving by users.

In addition, the system 1 of the present disclosure may be provided with a plurality of terminals 100, and in order to provide guidance for users and obtain user biometric information, the terminals 100 may be arranged within a predetermined distance (e.g., around three meters) from the loading table and the receiving table. Alternatively, the terminals may be arranged directly on the loading table and the receiving table.

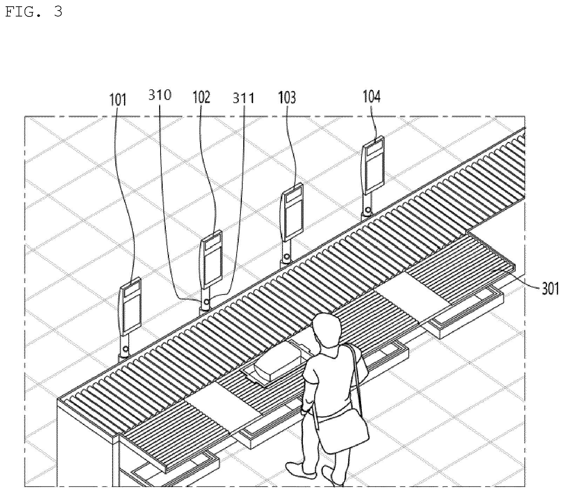

FIG. 3 a view illustrating terminals arranged at a loading table or a receiving table according to the exemplary embodiment of the present disclosure.

Referring to FIG. 3, at least one or more terminals 101, 102, 103, and 104 may be arranged at the receiving table 301 or the loading table 302 of the security screening device 300.

Each of the terminals may be arranged to face a user. That is, when the user is positioned at the loading table or receiving table, each terminal may face the front of the user so that facial information among biometric information may be easily obtained.

In addition, the security screening device 300 of the present disclosure may be provided with the plurality of readers, and each of the plurality of readers may be installed on one ends or one sides of the loading table, receiving table, and screening module.

In this case, as for the readers arranged at the loading table and receiving table, the respective readers on one or more terminals 101, 102, 103, and 104 may be arranged to face the user.

For example, in a case of the terminal 102, there may be provided with a terminal support 310 at the loading table or receiving table, and a reader 311 may be arranged on one side of the terminal support 310 to face a tray.

In this case, in order to better recognize an identification code attached to the tray, it may be preferable that the reader is arranged at the bottom of the terminal support in consideration of a height of the tray.

The above example may be implemented in each of all the readers 101, 102, 103, and 104.

Through this way, specifically, each of the receiving table or loading table of the security screening device 300 may be able to effectively perform authorization even in a case where a plurality of users use the receiving table or loading table simultaneously.

Hereinafter, the operation of the system according to the exemplary embodiment of the present disclosure will be described in detail.

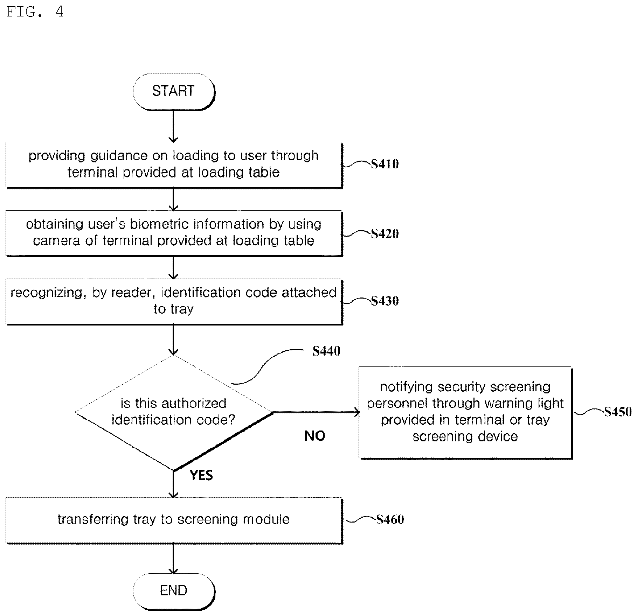

FIG. 4 is a view illustrating system operation before entry of the security screening device for a tray used by a user according to the exemplary embodiment of the present disclosure
First, a user may access a loading table of the security screening device.

Referring to FIG. 4, in step S410, a processor of a first terminal 100 arranged at the loading table may provide loading guidance to the user through a display. The user may load items into a tray on the basis of the loading guidance output on the display.

In step S420, the first terminal arranged at the loading table may obtain user biometric information by using a camera.

In this case, the biometric information may include the user's facial information, iris information, fingerprint information, etc.

The first terminal may extract feature points of the user's biometric information and store the feature points on a server.

In step S430, the security screening device 300 may recognize an identification code attached to the tray through the first reader arranged at the loading table before the tray enters a screening module. Through this way, whether an authorized tray is entering or an unauthorized object is entering may be obtained.

Specifically, in step S430, the first reader may recognize whether an authorized tray is entering or an unauthorized object is entering by recognizing the identification information attached to the tray.

As described above, the present disclosure has merits that a separate identification terminal is not required due to the identification information attached to a tray, so there are no obstructive factors in matters such as weight and volume, and it is easy to operate the security screening system and manage its data.

Meanwhile, according to the exemplary embodiment of the present disclosure, the identification information may be changed at every predetermined time, and risks such as imitation and damage of the identification information may be prevented through continual updating.

For example, in a case where identification information is in a barcode, a language for recognizing the barcode may include at least one or more of "UPC", "Code 128", and "QR Code", and security may be improved by using the language irregularly.

In addition, identification information may also be attached to an inner side of a casing at a specific position of a tray, and due to a specific size, paper, color impression, and the like thereof inside the casing, the risk of imitation and damage may be prevented.

According to the exemplary embodiment of the present disclosure, the server matches the biometric information received from the first terminal with the identification information identified from the first reader, and stores this information in the memory, thereby matching the tray to which the identification information is attached with the user's biometric information.

In step S340, the server according to the exemplary embodiment of the present disclosure may use the identification information obtained by using the first reader to determine whether the identification information is authorized identification information or not.

In this case, the authorized identification information may refer to identification information registered as a specific trustworthy tray in the system 1 according to the exemplary embodiment of the present disclosure.

In addition, in step S450, in a case of corresponding to identification information not authorized in advance as a result of recognizing the identification information obtained by using the first reader, the server may provide a notification to security screening personnel through at least one or more terminals 100 or a warning light provided in the security screening device.

For example, in a case where the security screening device is equipped with a warning light, the warning light may be attached to the security screening device and easily transmit a warning to nearby users and security screening personnel.

Alternatively, in a case where the first reader is unable to recognize identification information or may recognize merely part of the identification information, the security screening device may cause a notification light to activate and provide a notification to the security screening personnel.

Meanwhile, in a case when an external party attempts to hack a server through identification information, the server according to the exemplary embodiment of the present disclosure may also be able to block access to the server and then cause a warning light to activate so as to provide a notification to security screening personnel.

In step S460, the security screening device 300 may control the conveyor to transfer the tray loaded with the user's items to the screening module.

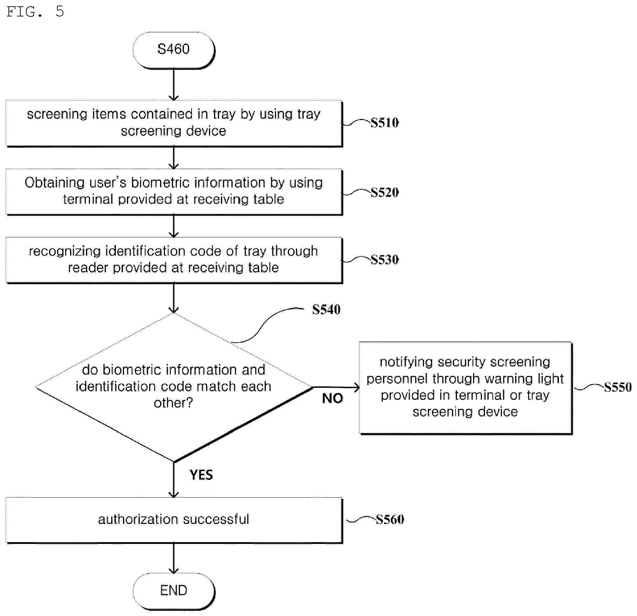

FIG. 5 is a view illustrating system operation performed from screening items through the security screening device to receiving the items by a user according to the exemplary embodiment of the present disclosure.

Referring to FIG. 5, a second reader arranged at the screening module may recognize identification information attached to a tray and transmit the identification information to the server.

In step S510, in a case where authorization of the tray is successful through the server, the security screening device may perform screening of the items contained in the tray by using the screening module.

After the screening of the items, the security screening device may transfer the tray to the receiving table.

According to the exemplary embodiment of the present disclosure, in step S520, a second terminal arranged at the receiving table may obtain the user's biometric information.

In addition, in step S530, a third reader provided at the receiving table may recognize the identification information attached to the tray. The terminals and readers arranged at the receiving table may transmit the obtained biometric information and identification information to the server.

In a case where the biometric information obtained through the first terminal and the identification information matched therewith and obtained through the first reader matches the identification information obtained through the third reader in step S540, the server may determine whether the biometric information obtained through the second terminal arranged at the receiving table matches the tray information or not in step S560.

That is, the server may determine that the biometric information and the tray information match each other in the case where the biometric information obtained through the second terminal arranged at the receiving table and the identification information obtained through the third reader respectively match the biometric information obtained through the terminal arranged at the loading table and the identification information obtained through the reader provided at the loading table.

By determining that the biometric information and the tray information match each other, the server may determine that the user and the tray match each other in the course from the loading table to the receiving table. Through this way, whether the items match the user or not may be checked, thereby improving efficiency in terms of security screening and airport operation.

Thereafter, through the receiving table, the user will be able to receive his/her items for which the item screening has been completed.

Meanwhile, in step S550, in a case where the biometric information obtained through the second terminal arranged at the receiving table and the identification information obtained through the third reader does not match any one of the biometric information and identification information as a result of comparing the biometric information obtained through the terminal arranged at the loading table and the identification information obtained through the reader provided at the loading table, the server may provide a notification to security screening personnel through a warning light provided in the terminal or security screening device.

Meanwhile, according to the exemplary embodiment of the present disclosure, solely one user may be positioned at the loading and receiving tables, and in a case where two or more people are recognized by the camera, loading and receiving may be restricted.

To solve this problem, each of the terminals arranged at the loading and receiving tables may provide guidance for the user on the loading or receiving restrictions by using a display thereof.

Specifically, in a case where two or more people are recognized by the camera when obtaining a user's biometric information by using the camera provided in the input unit, each terminal may guide the user that loading or receiving is restricted through the display of the terminal 100.

However, in a case where biometric information obtained through the camera of each terminal corresponds to the biometric information of a security screening agent other than the user, the corresponding information should be ignored.

That is, through a pre-learned database, the server may determine whether the obtained biometric information corresponds to that of the security screening agent or not, and in the case where the biometric information corresponds to the biometric information of the security screening agent, the server may exclude the corresponding biometric information and then perform authorization of the user's biometric information and identification code.

The operation may be designed to be operable only during predetermined time, and the predetermined time may be working hours of the security screening personnel.

As described above, the present disclosure may obtain the biometric information of the tray user and the identification information of the tray and identify the tray and the identity of the tray user through the pre-stored information.

In addition, in a case where the user is positioned at the loading table of the security screening device, the user may be guided on a tray use method and a biometric information recognition method through the terminal, and a database may be generated by matching the user's biometric information with the tray's identification information. The server may store usage records of used trays, the user biometric information, etc., and use the corresponding information for item screening and identity checking.

In a case where there is a problem in recognizing biometric information and identification information, guiding how to solve the problem may also be provided by sending an error message on a display of a user's terminal.

Those skilled in the art of the present disclosure will understand that various illustrative logical blocks, modules, processors, means, circuits, and algorithm steps, which are described in connection with the exemplary embodiments disclosed herein may be implemented by electronic hardware, various forms of programs or design code (referred to herein as software, for convenience), or a combination of all of these hardware and software.

The above-described present disclosure may be implemented as computer-readable code in a medium on which a program is recorded. The computer-readable medium includes all types of recording devices in which data readable by a computer system is stored. Examples of the computer-readable medium include a Hard Disk Drive (HDD), a solid state disk (SSD), a silicon disk drive (SDD) , a ROM, a RAM, a CD-ROM, a magnetic tape, a floppy disk, an optical data storage device, etc.

## Claims

1. A system for baggage screening, the system comprising:
a security screening device for detecting a tray to which identification information is attached and recognizing the tray;
at least one or more terminals for guiding a user and obtaining biometric information of the user; and
a server for matching the biometric information with the identification information of the tray and performing authorization of the biometric information and the identification information of the tray.

2. The system of claim 1, wherein the security screening device comprises a loading table, a receiving table, and a screening module and
the at least one or more terminals are arranged within a predetermined distance from each of the loading table or the receiving table, so as to provide guidance on loading or receiving to the user through a display.

3. The system of claim 2, wherein the security screening device comprises at least one or more readers for recognizing the identification information attached to the tray, and
the at least one or more readers are provided at each of the loading table, the receiving table, and the screening module.

4. The system of claim 3, wherein an identification code attached to the tray is recognized through a first reader, provided at the loading table, among the at least one or more readers,
the user's biometric information is obtained through a first terminal, arranged at the loading table, among the at least one or more terminals, and
the server matches the biometric information received from the first terminal with the identification information identified from the first reader and stores the matched information in a memory.

5. The system of claim 4, wherein the server determines whether the identification information obtained by using the first reader is the authorized identification information or not.

6. The system of claim 5, wherein, in a case of corresponding to identification information not authorized in advance as a result of recognizing the identification information obtained by using the first reader, the server provides a notification to security screening personnel through a warning light provided in the security screening device.

7. The system of claim 4, wherein the identification code attached to the tray is recognized through a third reader, provided at the receiving table, among the at least one or more readers,
the user's biometric information is obtained through a second terminal, arranged at the receiving table, among the at least one or more terminals,
the server matches the biometric information received from the second terminal with the identification information identified from the third reader, and
the server determines that the biometric information and the tray information match each other in a case where the biometric information obtained through the second terminal arranged at the receiving table and the identification information obtained through the third reader respectively match the biometric information obtained through the first terminal arranged at the loading table and the identification information obtained through the first reader provided at the loading table.

8. The system of claim 1, wherein, in a case where two or more people are recognized by a camera when the user's biometric information is obtained, the at least one or more terminals guide the user that loading or receiving is restricted through a display of each terminal.

9. A method for operating a system for baggage screening, the method comprising:
detecting, by a security screening device, a tray to which identification information is attached and recognizing the tray;
guiding, by at least one or more terminals, a user and obtaining the user's biometric information; and
matching, by a server, the biometric information with the identification information of the tray and performing authorization of the biometric information and the identification information of the tray.

10. The method of claim 9, wherein the security screening device comprises a loading table, a receiving table, and a screening module, and
the guiding of the user by the at least one or more terminals comprises providing guidance on loading or receiving to the user through a display by the at least one or more terminals arranged within a predetermined distance from each of the loading table or the receiving table.

11. The method of claim 10, wherein the obtaining of the user's biometric information by the at least one or more terminals comprises:
recognizing an identification code attached to the tray through a first reader, provided at the loading table, among the at least one or more readers; and
obtaining the user's biometric information through a first terminal, arranged at the loading table, among the at least one or more terminals, and
the matching, by the server, of the biometric information with the identification information of the tray and performing of the authorization of the biometric information and the identification information of the tray comprises matching, by the server, the biometric information received from the first terminal with the identification information identified from the first reader and storing the matched information in a memory.

12. The method of claim 11, wherein the matching, by the server, the biometric information with the identification information of the tray and performing of the authorization of the biometric information and the identification information of the tray comprises determining, by the server, whether the identification information obtained by using a third reader is the identification information obtained and authorized by using the first reader.

13. The method of claim 12, further comprising:
providing, by the server, a notification to security screening personnel through a warning light provided in the security screening device in a case of corresponding to identification information not authorized in advance as a result of recognizing the identification information obtained by using the first reader.

14. The method of claim 11, wherein the obtaining of the user's biometric information by the at least one or more terminals comprises:
recognizing the identification code attached to the tray through a third reader, provided at the receiving table, among the at least one or more readers; and
obtaining the user's biometric information through a second terminal, arranged at the receiving table, among the at least one or more terminals, and
the matching, by the server, of the biometric information with the identification information of the tray and performing of the authorization of the biometric information and the identification information of the tray comprises:
matching, by the server, the biometric information received from the second terminal with the identification information identified from the third reader; and
determining, by the server, that the biometric information and the tray information match each other in a case where the biometric information obtained through the second terminal arranged at the receiving table and the identification information obtained through the third reader respectively match the biometric information obtained through the first terminal arranged at the loading table and the identification information obtained through the first reader provided at the loading table.

15. The method of claim 9, wherein the guiding of the user by the at least one or more terminals comprises guiding, by the at least one or more terminals, the user that loading or receiving is restricted through a display of each terminal in a case where two or more people are recognized by a camera when the user's biometric information is obtained.
